# EUROPÄISCHE PATENTANMELDUNG

(11) **EP 1 426 276 A2**
(43) Veröffentlichungstag der Anmeldung: **09.06.2004**
(21) Anmeldenummer: 03010659.5
(22) Anmeldetag: 13.05.2003
(51) Int. Cl.: B62H 3/00

(54) **Transportabler Fahrradständer**

(30) Priorität: 04.12.2002 DE 10256836
(71) Anmelder: Soring, Hermann, 30419 Hannover (DE)
(72) Erfinder: Soring, Hermann, 30419 Hannover (DE)
(74) Vertreter: Junius, Walther, Dr.

(57) **Zusammenfassung**

Die Erfindung betrifft einen transportablen Fahrradständer, welcher an einem Fahrzeug, einem Fahrzeuganhänger oder einem unbeweglichen Gegenstand zu befestigen ist. Es ist die Aufgabe der Erfindung, einen einfachen und preisgünstigen transportablen Fahrradständer bereitzustellen, der reversibel an einen einem Fahrzeug, einem Fahrzeuganhänger, z.B. einem Anhänger oder Caravan oder einem unbeweglichen Gegenstand zu befestigen ist, der platzsparend zu transportieren ist und der die Möglichkeit bietet, mehrere Fahrräder mit ihrem Rahmen an dem Fahrradständer anzulehnen und anzuschließen und somit dem Rad einen sicheren Stand und einen sicheren Diebstahlschutz bietet. Die Erfindung besteht darin, dass der Fahrradständer eine Traverse ist, die an ihren Enden vertikal angeordnete Stützen aufweist, welche die Traverse auf dem Boden abstützen und von denen mindestens eine Stütze Mittel aufweist, mit denen der Fahrradständer an einem Fahrzeug, einem Fahrzeuganhänger oder einem unbeweglichen Gegenstand abnehmbar zu befestigen ist. Vorteilhaft für eine einfache Sicherung des Fahrradständers ist es, wenn die Stütze mindestens eine Oese, einen Haken oder einen Sperriegel aufweist, durch die ein Schloss, eine Kette oder sonstige Sicherungsmittel geführt werden können und mit welchem der Fahrradständer an einem Fahrzeug, einem Fahrzeuganhänger oder einem unbeweglichen Gegenstand zu befestigen und zu sichern ist. Besonders zweckmäßig ist es, wenn der Fahrradständer an der Deichsel eines Caravans zu befestigen ist, indem eine Stütze die Traverse auf dem Boden abstützt und indem die andere Stütze Mittel aufweist, mit denen der Fahrradständer an der Kupplung eines Anhängers oder Caravans abnehmbar zu befestigen ist.

## Beschreibung

Die Erfindung betrifft einen transportablen Fahrradständer, welcher an einem Fahrzeug, einem Fahrzeuganhänger oder einem unbeweglichen Gegenstand zu befestigen ist.

Urlauber, die mit einem Caravan oder Campinganhänger in die Ferien fahren, nehmen oftmals ihre Fahrräder mit an den Ferienort, um die Umgebung per Fahrrad erkunden zu können oder Einkäufe und Besorgungen per Fahrrad erledigen zu können.

Oftmals fehlen jedoch auf den Campingplätzen fest installierte Fahrradständer, die ein sicheres Anschließen der mitgebrachten Räder erlauben würden. Falls ein Campingplatz, was sehr selten der Fall ist, eigene Ständer installiert hat, sind diese nur an einer zentralen Stelle des Campingplatzes aufgestellt. Aber besonders bei hochwertigen Fahrrädern wollen die Besitzer diese mit sicherem Stand vor Beschädigung geschützt durch Anschließen von Rahmen und schnellverspannten Rädern an einem Fahrradständer sichern. Zusätzlich ist es für die Inhaber bequemer, die Fahrräder in direkter Umgebung des Caravans angeschlossen zu haben. Sie sind durch die unmittelbare Nähe schnell einsatzbereit und unter ständiger Beobachtung der Besitzer.

Aus der DE 201 16 352 U1 ist ein mobiler Fahrradständer bekannt geworden, der ein oder mehrere Abstellplätze aufweist und an die Zugvorrichtung eines Anhängers angebracht werden kann und hierzu einen Adapter oder eine Klemmvorrichtung aufweist.

Dieser Fahrradständer ist aber nicht während der Reise platzsparend im Caravan zu verstauen, gerade wenn der Fahrradständer mehrere Abstellplätze aufweisen soll. Die Fahrräder haben hier keinen sicheren Stand, da nur das Vorderrad angeschlossen wird. Ein in dieser Weise abgestelltes und angeschlossenes Fahrrad kann umfallen und dabei beschädigt werden. Darüber hinaus ist das Rad nur unzureichend gegen Diebstahl gesichert. Es können keine hochwertigen Fahrräder mit ihrem Rahmen an dem Fahrradständer angeschlossen werden, denn dann nimmt der bekannte mobile Fahrradständer zu viel von dem ohnehin knappen Stauraum eines Caravans oder eines Campinganhängers in Anspruch.

Die Erfindung vermeidet die Nachteile des Standes der Technik. Es ist die Aufgabe der Erfindung, einen einfachen und preisgünstigen transportablen Fahrradständer bereitzustellen, der reversibel an einem Fahrzeug, einem Fahrzeuganhänger, z.B. einem Anhänger oder Caravan oder einem unbeweglichen Gegenstand zu befestigen ist, der platzsparend zu transportieren ist und der die Möglichkeit bietet, mehrere Fahrräder mit ihrem Rahmen an den Fahrradständer anzulehnen und anzuschließen und somit dem Rad einen sicheren Stand und einen sicheren Diebstahlschutz gewährt.

Die Erfindung besteht darin, dass der Fahrradständer eine Traverse ist, die an ihren Enden vertikal angeordnete Stützen aufweist, welche die Traverse auf dem Boden abstützen und von denen mindestens eine Stütze Mittel aufweist, mit denen der Fahrradständer an einem Fahrzeug, einem Fahrzeuganhänger oder einem unbeweglichen Gegenstand abnehmbar zu befestigen ist.

Vorteilhaft für eine einfache Sicherung des Fahrradständers ist es, wenn die Stütze mindestens eine Öse, einen Haken oder einen Sperrriegel aufweist, durch die ein Schloss, eine Kette oder ein sonstiges Sicherungsmittel geführt werden kann und mit welchem der Fahrradständer an einem Fahrzeug, einem Fahrzeuganhänger oder einem unbeweglichen Gegenstand zu befestigen und zu sichern ist.

Die Sicherung an einem Fahrzeug oder Fahrzeuganhänger kann beispielsweise derart erfolgen, dass der Fahrradständer an einer Kette befestigt ist, die in Form eines geschlossenen Kreises auf den Boden gelegt ist und ein Fahrzeug oder Anhänger mit seinem Fahrzeugreifen derart geparkt wird, dass der Wagenreifen innerhalb des Innenraumes der Kette oder direkt auf der Kette steht. Derart ist der an der Kette angeordnete Fahrradständer vor Diebstahl geschützt. Eine weitere Möglichkeit der Sicherung ist dann gegeben, wenn der Fahrradständer an einer Platte befestigt ist, auf der der Wagenreifen steht.

Besonders zweckmäßig ist es, wenn der Fahrradständer an der Deichsel eines Caravans zu befestigen ist, indem eine Stütze die Traverse auf dem Boden abstützt und indem die andere Stütze Mittel aufweist, mit denen der Fahrradständer an der Kupplung eines Anhängers oder Caravans abnehmbar zu befestigen ist.

Zu diesem Zweck kann der Fahrradständer mittels eines Kugelkopfes an der Kupplung eines Anhängers oder Caravans zu befestigen sein.

Die Kupplung von Anhängern ist weitestgehend genormt, so dass der Fahrradständer ohne Probleme an verschiedenste Anhängermodelle gekuppelt werden kann.

Die Kupplungseinrichtung weist oftmals eine Sicherungsvorrichtung gegen unerwünschtes Auskuppeln bzw. Ankuppeln, einen sog. "Multisafe", auf. Ist der Fahrradständer am Anhänger angekuppelt und ein sog. "Multisafe" oder eine andere Diebstahlsicherung eingesetzt, ist sowohl der Fahrradständer als auch der Anhänger gegen Diebstahl gesichert. Einerseits ist der Fahrradständer an dem Anhänger gegen unerwünschtes Entkuppeln gesichert, andererseits ist die Kupplung des Anhängers durch die Anordnung des Fahrradständers an dieser belegt, so dass der Anhänger nicht an ein fremdes Zugfahrzeug gekuppelt werden kann.

Besonders vorteilhaft ist eine Ausgestaltung, bei der ein Abstandhalter parallel zum Rahmen an der dem Rahmen abgewandten freien Seite der Stütze angeordnet ist und an seinem freien Ende den Kugelkopf trägt. Dabei ist es zweckmäßig, wenn der Abstandhalter verschwenkbar am Kugelkopf angelenkt ist. Durch die Drehmöglichkeit des Kugelkopfes in der Kupplung in horizontaler Ebene und der gleichzeitigen vertikalen Verschwenkmöglichkeit kann der Fahrradständer bei jeder Geländeunebenheit aufgebaut werden und weist dennoch einen stabilen Stand auf.

Die Traverse des Fahrradständers kann beispielsweise ein Rahmen oder eine Lochleiste sein, die durch seitlich angeordnete vertikale Stützen ungefähr in der Höhe der Mittelstange eines Fahrradrahmens angeordnet ist. Der Fahrradständer kann von mindestens einem Fahrrad, meist aber mehreren Fahrrädern als Ständer benutzt werden, indem die Fahrradrahmen parallel zur Traverse angelehnt und angeschlossen werden.

Zweckmäßig ist es, wenn die Traverse ein Rahmen oder ein Lochbalken ist. Durch die Öffnungen im Rahmen oder durch die Öffnungen im Lochbalken können Fahrradschlösser hindurchgeschoben werden. Das Fahrrad ist sicher angeschlossen und kann durch die begrenzte Öffnungsweite nicht entlang des Fahrradständers verschoben werden. Es ist sicher vor Diebstahl geschützt.

Vorteilhaft ist es, wenn die den Rahmen am Boden abstützende Stütze mittels einer Einschlaghülse in das Erdreich einzustecken ist. Die Einschlaghülse ist einfach und schnell in den Untergrund einzubringen und gibt der in die Hülse einzusteckenden Stütze Stabilität.

Aber nicht immer erlaubt der Untergrund ein Einschlagen einer Einschlaghülse. In einem solchen Fall ist es zweckmäßig, wenn die den Rahmen am Boden abstützende Stütze aus zwei oder mehreren Standbeinen in Form eines Dreieckes oder einer Pyramide besteht, die dann gegebenenfalls mit Bodennägeln (Heringen) befestigt werden können.

Der Fahrradständer ist besonders dann platzsparend zu verstauen und zu transportieren, wenn die den Rahmen abstützende Stütze in der Ebene des Rahmens verschwenkbar angelenkt ist.

Zweckmäßig ist es, wenn an dem Rahmen Ausgestaltungen zum Einschieben und Sichern des Standes eines Rades angeordnet sind. Die Räder können senkrecht zum Rahmen in die Ausgestaltungen eingeschoben werden und mehrere in den Fahrradständer eingeschobene Fahrräder können unabhängig voneinander benutzt werden.

Der aufgestellte Fahrradständer ist auch im Dunkeln von Verkehrsteilnehmern zu erkennen, wenn an dem Fahrradständer Rückstrahler, insbesondere Katzenaugen angeordnet sind.

Der Fahrradständer ist besonders einfach, stabil und kostengünstig herstellbar, wenn dieser aus Metall, Aluminium oder Kunststoff gefertigt ist.

Das Wesen der Erfindung ist nachstehend anhand von in der Zeichnung schematisch dargestellten Ausführungsbeispielen näher erläutert. Es zeigen die:
- Fig.1: einen aufgestellten Fahrradständer
- Fig.2: einen anderen aufgestellten Fahrradständer mit einem Lochbalken als Traverse
- Fig.3: Ansicht von oben auf einen Fahrradständer der Fig.1
- Fig.4: den verschwenkbar am Abstandhalter angelenkten Kugelkopf
- Fig.5: einen diebstahlgeschützten freistehenden Fahrradständer
- Fig.6: einen diebstahlgeschützten Fahrradständer mit einer an einer Stütze angelenkten Platte.

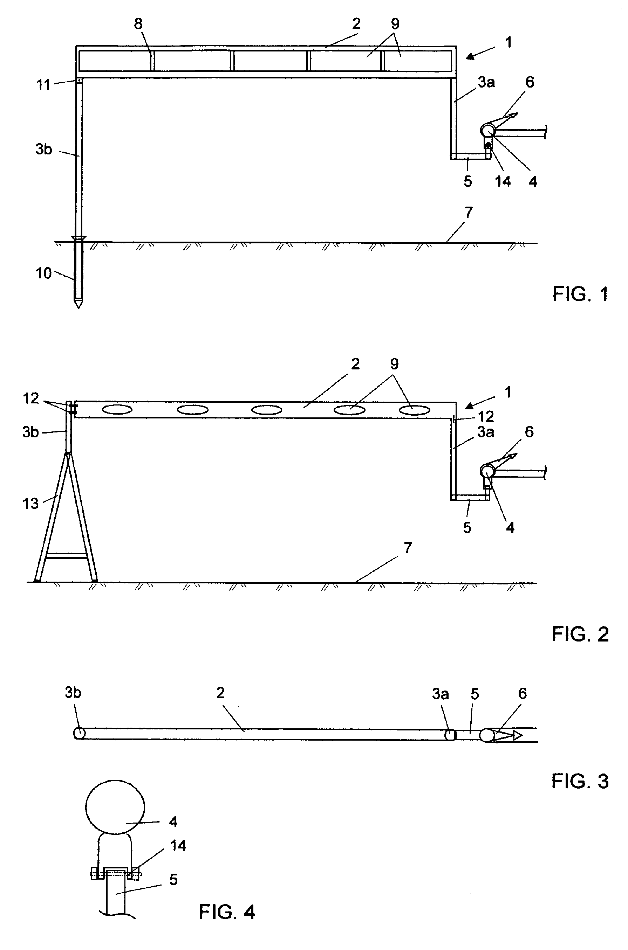

In der Figur 1 ist ein aufgestellter transportabler Fahrradständer 1 dargestellt, der aus einer Traverse 2 und seitlich angeordneten, vertikalen Stützen 3a,b besteht.
Die eine Stütze 3a ist mittels eines Kugelkopfes 4, der über einen Abstandhalter 5 an der Stütze 3a angeordnet ist, an der Kupplung 6 eines Anhängers oder Caravans reversibel befestigt. Die weitere Stütze 3b stützt die Traverse 2 auf dem Erdboden 7 ab. Die Stützen 3 weisen eine derartige Länge auf, dass die Traverse waagerecht in ungefährer Höhe einer waagerechten Fahrradrahmenstange eines Erwachsenenfahrrades verläuft.
Die Traverse 2 ist als Rahmen ausgebildet, der durch Streben 8 unterteilt ist und mehrere Öffnungen 9 aufweist. Das abzustellende Fahrrad kann parallel zu der Traverse 2 an diese angelehnt werden und mittels eines Schlosses, welches durch die Öffnung 9 geführt wird, mit dem Rahmen des Fahrrades diebstahlsicher angeschlossen werden. Durch die Unterteilung des Rahmens in mehrere Öffnungen 9 kann das angeschlossene Fahrrad nicht über die gesamten Länge der Traverse 2 verschoben werden, sondern steht nur begrenzt beweglich gesichert.
Die Stütze 3b stützt die Traverse 2 am Erdboden ab und ist in einer in den Boden 7 einzuschlagenden Einschlaghülse 10 gelagert. Die Stütze 3b ist mittels eines Gelenkes 11 an dem Rahmen angelenkt und ist an diesem Gelenk 11 in Längsrichtung der Traverse 2 zu verschwenken. Der Fahrradständer 1 kann beim Aufbau daher den jeweiligen topographischen Gegebenheiten des Campingortes angepasst werden.
Der Kugelkopf 4 des Fahrradständers 1 ist in horizontaler Ebene drehbar in der Kupplung 6 des Anhängers gelagert. Der transportable Fahrradständer 1 kann in einem Kreisabschnitt, der durch den Radius des Fahrradständers begründet und nicht vom Anhänger selber eingenommen wird, in einem beliebigen Winkel aufgestellt werden.

In der Fig. 2 ist ein anders gestalteter transportabler Fahrradständer dargestellt, der aus einer Traverse 2 und seitlich angeordneten, vertikalen Stützen 3a,b besteht. Die Traverse 2 ist eine Lochleiste, die mehrere Öffnungen 9 aufweist, durch die ein Fahrradschloss gezogen werden kann und das an der Traverse 2 abgestellte Fahrrad sichert.

Die Stütze 3a ist über den Abstandhalter 5, der einen Kugelkopf 4 trägt, an der Kupplung 6 eines Anhängers reversibel befestigt.
Beide Stützen 3 sind an der Traverse über Ösen oder Stifte 12 abnehmbar angeordnet. Bei dem Transport des Fahrradständers ist dieser in drei längliche Teile, zwei Stützen 3 und eine Traverse 2 auseinandernehmbar und platzsparend zu verstauen. Für einen Untergrund, der das Einschlagen einer Einschlaghülse nicht erlaubt, ist ein Fuß 13 im unteren Bereich der Stütze 3a angeordnet. Der Fuß hat die Form eines Dreieckes und kann gegebenenfalls mittels Bodennägeln (Heringen) befestigt werden.

Die Fig. 3 zeigt eine Ansicht von oben auf einen Fahrradständer 1 der Fig. 1. Die Traverse 2 hat in Aufsicht die Form eines Rechteckes und ist von den Stützen 3 getragen, wobei die Stütze 3a über ein Abstandhalter 5 mit angeordnetem Kugelkopf an die Kupplung 6 eines Anhängers angekuppelt ist.

In der Fig. 4 ist dargestellt, dass der Abstandhalter 5 an dem Kugelkopf 4 in vertikaler Richtung durch ein Gelenk 14 verschwenkbar angeordnet ist. Mit einem in der Fig. 1 beschriebenen Fahrradständer ist der Aufbau des Fahrradständers denkbar einfach: der Fahrradständer ist bei eingeklappter Stütze 3b mit dem Kugelkopf 4 an die Kupplung 6 des Anhängers zu befestigen. An der Stelle, an der die Traverse 2 mit dem Gelenk 11 der eingeklappten Stütze 3b auf dem Boden aufliegt, ist die Hülse 10 einzuschlagen und für den Aufbau ist nun die ausgeklappte Stütze 3b in die Hülse 10 einzustecken.

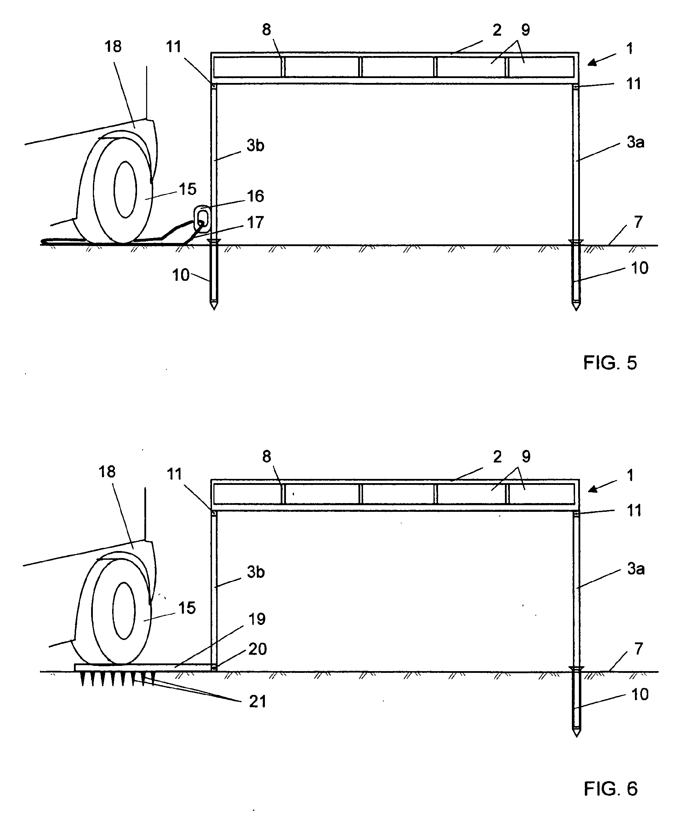

Die Figur 5 zeigt einen abnehmbaren freistehenden Fahrradständer 1, der durch die Platzierung eines Wagenreifens 15 gegen Diebstahl gesichert ist. Der Fahrradständer 1 weist eine Traverse 2 auf, an deren Enden vertikal verlaufende Stützen 3 durch Gelenke 20 angelenkt sind. Die Stützen 3 stützen die Traverse 2 auf dem Boden ab. Die Stützen 3 weisen gleiche Längen auf. Sie sind nach dem Teleskop-Prinzip in ihrer Länge verstellbar und sind somit den Unebenheiten des Untergrundes anzupassen. Eine Stütze 3a weist eine Öse 16 auf, durch die eine Kette 17 gezogen ist und in deren Ketteninnenraum ein Wagenreifen 15 eines parkenden Fahrzeugs 18 platziert ist.

In der Figur 6 weist der freistehende Fahrradständer 1 an einer Stütze 3b eine durch ein Gelenk 20 angelenkte Platte 19 auf. Auf dieser Platte 19 ist zur Sicherung des Fahrradständers 1 der Wagenreifen 15 eines parkenden Fahrzeugs 18 abgestellt. Durch das hohe Eigengewicht des Fahrzeugs ist es nicht möglich, die Platte 19 unter dem auf ihr parkenden Wagenreifens 15 hervorzuziehen und den Fahrradständer zu stehlen. Die Platte 19 weist auf ihrer dem Boden zugewandten Seite Kopplungselemente 21 wie beispielsweise Rechen auf, die einen festen Halt der Platte 19 an dem Untergrund gewähren.

Die Erfindung beseitigt somit das Problem, dass auf Campingplätzen in der Regel Einrichtungen zum standfesten Abstellen und diebstahlsicheren Anschließen von Fahrrädern fehlen und ersetzt bisherige Notlösungen. Durch die Erfindung gelingt es, eine solche Einrichtung im Caravan selbst bei sehr geringem Platzbedarf mitzuführen und mit geringem Aufwand aufzustellen und am Caravan diebstahlssicher zu befestigen. Es werden Beschädigungen am Caravan, am Fahrzeug oder Anhänger vermieden, welche durch das Umfallen von unsachgemäß abgestellten Fahrrädern hervorgerufen werden können. Durch die Ankupplung dieses Fahrradständers an der Anhängerkupplung des Caravans ist auch der Caravan selbst vor Diebstahl geschützt.

### LISTE DER BEZUGSZEICHEN

- 1: Fahrradständer
- 2: Traverse
- 3: Stütze
- 4: Kugelkopf
- 5: Abstandhalter
- 6: Kupplung
- 7: Boden
- 8: Strebe
- 9: Öffnung
- 10: Einschlaghülse
- 11: Gelenk
- 12: Öse, Stift
- 13: Fuß
- 14: Gelenk
- 15: Wagenreifen
- 16: Öse
- 17: Kette
- 18: Fahrzeug
- 19: Platte
- 20: Gelenk
- 21: Kopplungselement

## Patentansprüche

1. Transportabler Fahrradständer,
welcher an einem Fahrzeug, einem Fahrzeuganhänger oder einem unbeweglichen Gegenstand zu befestigen ist,
**dadurch gekennzeichnet,**
**dass** der Fahrradständer (1) eine Traverse (2) ist,
die an ihren Enden vertikal angeordnete Stützen (3) aufweist, welche die Traverse auf dem Boden abstützen und
von denen mindestens eine Stütze Mittel aufweist,
mit denen der Fahrradständer (1) an einem Fahrzeug, einem Fahrzeuganhänger oder einem unbeweglichen Gegenstand abnehmbar zu befestigen ist.

2. Fahrradständer nach Anspruch 1,
**dadurch gekennzeichnet,**
**dass** die Stütze (3), mindestens eine Öse (16), einen Haken oder einen Sperriegel aufweist, durch die eine Kette (17), ein Schloss oder sonstige Sicherungsmittel geführt werden können und mit welchem der Fahrradständer (1) an einem Fahrzeug (18), einem Fahrzeuganhänger oder einem unbeweglichen Gegenstand zu befestigen und zu sichern ist.

3. Fahrradständer nach Anspruch 1,
**dadurch gekennzeichnet,**
**dass** der Fahrradständer (1) an einer Platte (19) befestigt ist, auf der der Wagenreifen (15) steht.

4. Fahrradständer nach Anspruch 1,3
**dadurch gekennzeichnet**,
die Platte (19) durch ein Gelenk (20) an der Stütze (3) angelenkt ist und
dass die Platte (19) auf der dem Untergrund zugewandten Seite Kopplungselemente (21) aufweist.

5. Fahrradständer nach Anspruch 1,
**dadurch gekennzeichnet,**
**dass** der Fahrradständer (1) an einer Kette (17) befestigt ist, in deren Innenraum der Wagenreifen (15) steht.

6. Fahrradständer nach Anspruch 1,
**dadurch gekennzeichnet,**
**dass** dieser an der Deichsel eines Caravans zu befestigen ist,
**dass** eine Stütze (3b) die Traverse auf dem Boden abstützt und
**dass** die andere Stütze Mittel aufweist,
mit denen der Fahrradständer (1) an der Kupplung (6) eines Anhängers oder Caravans abnehmbar zu befestigen ist.

7. Fahrradständer nach Anspruch 1,6
**dadurch gekennzeichnet,**
**dass** die Traverse (2) ein Rahmen oder ein Lochbalken ist.

8. Fahrradständer nach Anspruch 1,6
**dadurch gekennzeichnet,**
**dass** die die Traverse (2) am Boden abstützende Stütze (3) mittels einer Einschlaghülse (10) in den Boden (7) einzustecken ist.

9. Fahrradständer nach Anspruch 1,6
**dadurch gekennzeichnet,**
**dass** die die Traverse (2) am Boden abstützende Stütze (3) einen Fuß (13) aufweist.

10. Fahrradständer nach Anspruch 1,6
**dadurch gekennzeichnet,**
**dass** die die Traverse (2) abstützende Stütze (3a,b) in der Ebene der Traverse (2) verschwenkbar angelenkt ist.

11. Fahrradständer nach Anspruch 6,
**dadurch gekennzeichnet,**
**dass** der Fahrradständer (1) mittels eines Kugelkopfes (4) an der Kupplung (6) eines Anhängers oder Caravans zu befestigen ist.

12. Fahrradständer nach Anspruch 6,
**dadurch gekennzeichnet,**
**dass** ein Abstandhalter (5) parallel zur Traverse (2) an der der Traverse abgewandten freien Seite der Stütze (3a) angeordnet ist
und an seinem freien Ende den Kugelkopf (4) trägt.

13. Fahrradständer nach Anspruch 1,6,11
**dadurch gekennzeichnet,**
**dass** der Abstandhalter (5) verschwenkbar am Kugelkopf (4) angelenkt ist.

14. Fahrradständer nach Anspruch 1,6
**dadurch gekennzeichnet,**
**dass** an der Traverse (2) Ausgestaltungen zum Einschieben und Sichern des Standes eines Rades angeordnet sind.

15. Fahrradständer nach Anspruch 1,6
**dadurch gekennzeichnet,**
**dass** der Fahrradständer (1) aus Metall, Aluminium oder Kunststoff gefertigt ist.

16. Fahrradständer nach Anspruch 1,6
**dadurch gekennzeichnet,**
**dass** an dem Fahrradständer (1) Rückstrahler, insbesondere Katzenaugen angeordnet sind.

17. Fahrradständer nach Anspruch 1,6
**dadurch gekennzeichnet,**
**dass** der Rahmen durch mehrere Streben (8) unterteilt ist.
